(19) Europäisches Patentamt
European Patent Office
Office européen des brevets

(11) **EP 0 894 801 B1**

(12) **EUROPÄISCHE PATENTSCHRIFT**

(45) Veröffentlichungstag und Bekanntmachung des Hinweises auf die Patenterteilung:
**08.05.2002 Patentblatt 2002/19**

(51) Int Cl.$^7$: **C07F 5/02**

(21) Anmeldenummer: **98113560.1**

(22) Anmeldetag: **21.07.1998**

(54) **Wasserlösliche substituierte Pyridinborane**

Water soluble substituted pyridine boranes

Boranes de pyridine substiutés et solubles dans l'eau

(84) Benannte Vertragsstaaten:
**AT BE CH DE DK ES FI FR GB IT LI NL SE**

(30) Priorität: **02.08.1997 DE 19733440**

(43) Veröffentlichungstag der Anmeldung:
**03.02.1999 Patentblatt 1999/05**

(73) Patentinhaber: **BAYER AG**
**51368 Leverkusen (DE)**

(72) Erfinder: **Holzner, Christoph, Dr.**
**51061 Köln (DE)**

(56) Entgegenhaltungen:
**WO-A-93/25544**

EP 0 894 801 B1

**Beschreibung**

Die vorliegende Erfindung betrifft wasserlösliche, substituierte Pyridinborane der Formel

$$MX-C_5H_4N \cdot BH_3,$$

Verfahren zu ihrer Herstellung sowie deren Verwendung als Reduktionsmittel in organischen Synthesen, zum chemischen Galvanisieren und zum Stabilisieren oxidationsempfindlicher Substanzen.

Aus C. F. Lane, Aldrichimica Acta, 6, (1973) Seiten 51 bis 59, sind Pyridinboran sowie 2,6-Lutidinboran bekannt und es werden deren Anwendungen als Stabilisatoren, als Additive in Dieselkraftstoffen, in fotografischen Entwicklungsprozessen aber auch als reduzierende Agenzien in chemischen Reaktionen beschrieben.

WO 93/25544 beschreibt ein Verfahren zur Darstellung von einem Pyridinboran.

In Chemical Abstracts werden unter CA72: 120 939 3,4-Lutidinboran und unter CA 62: 127 42a 2,4-Lutidinboran beschrieben, ohne daß etwas über deren industrielle Anwendung bekannt geworden sei.

Die Anwendung tertiärer Aminborane war bisher aufgrund ihrer niedrigen Wasserlöslichkeit in industriellem Maßstab nur sehr beschränkt möglich. So lösen sich bei 25°C nur 0,1 bis 1 g Pyridinboran in 100 ml Wasser (C. F. Lane, Aldrichimica Acta, 6, (1973) Seite 52).

Bekannt ist aber auch, daß das Reduktionsvermögen der Aminborane mit zunehmender Zahl der Alkyl- oder Arylgruppen absinkt, so daß die Aminborane tertiärer Amine besonders milde, selektiv wirkende Reduktionsmittel darstellen.

Aufgabe der vorliegenden Erfindung war es, wasserlösliche, substituierte Pyridinborane und ein möglichst einfaches Verfahren zu ihrer Herstellung zur Verfügung zu stellen, sowie deren Verwendung zum chemischen Galvanisieren und zum Stabilisieren oxidationsempfindlicher Substanzen.

Diese Aufgabe konnte überraschenderweise durch die erfindungsgemäßen Stoffe und Syntheseverfahren gelöst werden.

Gegenstand der Erfindung sind wasserlösliche, substituierte Pyridinborane der allgemeinen Formel

$$MX-C_5H_4N \cdot BH_3,$$

wobei

X     eine -COO⁻ oder -SO₃⁻-Gruppe bedeutet und

M     für ein Alkali-, Wasserstoff- oder das Äquivalent eines Erdalkaliions steht.

Der Substituent X ist mit einem Kohlenstoffatom in Position 2, 3 oder 4 des Pyridinrings, bevorzugt mit dem Ringatom in Position 3 oder 4 verknüpft. Das Stickstoffatom erhält bei dieser Numerierung die Positionsnummer 1.

M steht bevorzugt für ein Wasserstoffion oder für ein Alkali-Kation der Reihe Lithium, Natrium, Kalium, oder für ein Äquivalent eines Erdalkali-Kations der Reihe Magnesium, Kalzium, Strontium, Barium. Besonders bevorzugt steht M für ein Natriumion. Die Bedeutung M = H⁺ ist nur in sauren wäßrigen Lösungen von Bedeutung, in denen das substituierte Pyridinboran eine begrenzte Lebensdauer hat.

Ganz besonders bevorzugt sind substituierte Pyridinborane der allgemeinen Formel

$$MOOC - C_5H_4N \cdot BH_3,$$

in welcher die COO⁻-Gruppe mit dem Ringatom Nummer 3 oder 4 des Pyridinrings verknüpft ist und M die oben genannten Bedeutungen hat.

Die erfindungsgemäßen wasserlöslichen substituierten Pyridinborane lassen sich in sehr einfacher Weise aus käuflichen Rohstoffen herstellen. Dazu setzt man äquimolare oder annähernd äquimolare Mengen der entsprechenden Pyridincarbon- oder Pyridinsulfonsäure mit einem Boranat in einem Lösungsmittel um.

Gemäß der allgemeinen Reaktionsgleichung

$$HX-C_5H_4N + MBH_4 \rightarrow MX-C_5H_4N \cdot BH_3 + H_2,$$

in welcher

X und M die oben angegebenen Bedeutungen haben,

entstehen die substituierten Pyridinborane in einer einstufigen Reaktion mit hohen Ausbeuten.

Bevorzugt wird das Boranat in einem Lösungsmittel vorgelegt und die Pyridincarbonsäure oder Pyridinsulfonsäure anschließend zugegeben.

Das Lösungsmittel muß die eingesetzten Rohstoffe zumindest teilweise auflösen. Vollständiges Auflösen der eingesetzten Rohstoffe ist zur Durchführung der Reaktion nicht erforderlich, da sich die Synthese auch in Suspension durchführen läßt.

Das Lösungsmittel kann aus der Gruppe der Kohlenwasserstoffe, der halogenierten Kohlenwasserstoffe, der Carbonsäureester oder der Ether stammen. Als Beispiele aus diesen Substanzklassen seien genannt Toluol, Methylenchlorid, Butylacetat und Diisopropylether.

Bevorzugt werden Dialkylether des Ethylenglykols, des Diethylenglycols oder des Triethylenglykols verwendet.

Besonders bevorzugt - wegen seines niedrigen Siedepunkts - ist der Ethylenglykoldimethylether (Monoglyme).

Die Reaktion wird bei einer Temperatur von 10 bis 60°C durchgeführt, bevorzugt bei einer Temperatur von 20 bis 30°C.

Eine besonders bevorzugte Verfahrensweise besteht darin, Natriumboranat unter Stickstoff in Monoglyme vorzulegen und langsam bei einer Temperatur von 20 bis 30°C die feste Pyridincarbon- oder Pyridinsulfonsäure zuzugeben.

Nach Beendigung der Zugabe schließt sich noch eine Nachreaktionszeit von etwa einer Stunde an, währenddessen eventuell schwerlösliche Pyridinborane auskristallisieren. Danach isoliert man das Pyridinboran durch Filtration oder durch Abdestillieren des Lösungsmittels.

Die substituierten Pyridinborane sind aufgrund ihres salzartigen Charakters sehr gut löslich in Wasser. Sie lassen sich als Reduktionsmittel für organische Substanzen und zur Abscheidung von Edelmetallionen aus wäßrigen Lösungen von Edelmetallsalzen verwenden. Dabei können sie in festem Zustand oder als wäßrige Lösung eingesetzt werden. Als zu reduzierende organische Substanzen seien beispielsweise Aldehyde, Ketone und Säurechloride genannt. Als zu reduzierende Edelmetallsalze seien beispielsweise Salze von Silber, Gold und Ionen der Platingruppenmetalle genannt.

Die Erfindung wird anhand der nachfolgenden Beispiele erläutert.

**Beispiele**

**Beispiel 1**

**Herstellung von Natriumpyridin-4-carboxylat-boran**

7,6 g (0,2 mol) Natriumboranat werden in 150 ml Monoglyme (Monoethylenglykoldimethylether) suspendiert. Man gibt unter Rühren und zeitweiliger Kühlung 24,6 g (0,2 mol) Pyridin-4-carbonsäure (Isonicotinsäure) hinzu, und zwar in 9 Portionen über einen Zeitraum von 20 min verteilt. Die Temperatur der Reaktionsmischung liegt dabei zwischen 23 und 29°C. Mit Zugabe der Pyridincarbonsäure setzt eine lebhafte Wasserstoffentwicklung ein, die nach Beendigung der Säurezugabe abbricht. Man läßt nach Beendigung der Säurezugabe noch 50 min stehen. Während dieser Zeit entstehen große Mengen eines Niederschlags. Der Niederschlag wird abfiltriert, zunächst 15 min am Rotationsverdampfer bei 60°C und 20 mbar getrocknet und anschließend 2 Stunden im Trockenschrank bei 80°C. Es werden 30,5 g (entsprechend 96,0 % der Theorie) eines farblosen Pulvers erhalten. Der Gehalt an reduzierendem $BH_3$-Addukt wird iodometrisch zu 89,5 % bestimmt. Das $^{11}$B-NMR-Spektrum zeigt ein breites Hauptsignal bei -14 ppm (Lösungsmittel $D_2O$) bzw. -11 ppm (Lösungsmittel Dimethylsulfoxid). Die Verbindung ist sehr gut in Wasser löslich.

**Beispiel 2**

**Herstellung von Natriumpyridin-3-carboxylat-boran**

3,8 g (0,1 mol) Natriumboranat werden unter Stickstoff in 75 ml Monoglyme (Monoethylenglykoldimethylether) suspendiert. Man gibt über einen Feststofftrichter mit Förderschnecke unter Rühren und zeitweiliger Kühlung 12,3 g (0,1 mol) Pyridin-3-carbonsäure (Nicotinsäure) hinzu. Die Zugabedauer beträgt 15 min, die Temperatur der Reaktionsmischung liegt zwischen 20 und 30°C. Nach Zugabe der Säure wird die gelbe, leicht trübe Lösung noch eine Stunde lang stehengelassen. Anschließend wird das Lösungsmittel am Rotationsverdampfer im Wasserstrahlvakuum (20 - 25 mbar) bei Temperaturen bis 60°C abdestilliert. Der z.T. noch klebrige Rückstand wird im Vakuumtrockenschrank 1 h bei 60°C und 2,5 h bei 60 bis 50°C unter Vakuum (5 mbar) getrocknet. Es werden 15,1 g (entsprechend 95,6 % der Theorie) eines gelben Pulvers erhalten. Der Gehalt an reduzierendem $BH_3$-Addukt wird iodometrisch zu 88,9 % bestimmt. Das $^{11}$B-NMR-Spektrum zeigt ein breites Hauptsignal bei -14 ppm (Lösungsmittel $D_2O$) bzw. -13 ppm (Lösungsmittel Dimethylsulfoxid). Die Verbindung ist sehr gut in Wasser löslich.

**Beispiel 3**

**Herstellung von Natriumpyridin-3-sulfonat-boran**

3,8 g (0,1 mol) Natriumboranat werden in 100 ml Monoglyme (Monoethylenglykoldimethylether) suspendiert. Man gibt unter Rühren und zeitweiliger Kühlung 15,9 g (0,1 mol) Pyridin-3-sulfonsäure hinzu, und zwar in 2 Portionen über einen Zeitraum von 10 min verteilt. Die Temperatur der Reaktionsmischung liegt dabei bei 25°C. Danach heizt man innerhalb einer Stunde auf 35°C auf. Es werden 2,2 l Wasserstoffgas aufgefangen. Anschließend filtriert man und engt das Filtrat am Rotationsverdampfer bei 20 bis 25 mbar und Temperaturen bis 60°C ein. Der durch Monoglymereste verunreinigte Rückstand zeigt im $^{11}$B-NMR-Spektrum (Lösungsmittel Dimethylsulfoxid) ein breites Hauptsignal bei -12 ppm. Die Verbindung ist (auch nach weiterem Trocknen) sehr gut in Wasser löslich.

**Patentansprüche**

1. Pyridinborane der allgemeinen Formel

$$MX\text{-}C_5H_4N \cdot BH_3,$$

**dadurch gekennzeichnet, daß**

    X für eine $-COO^-$-Gruppe oder eine $SO_3^-$-Gruppe steht und

M für ein Alkali-, Wasserstoff- oder das Äquivalent eines Erdalkaliions steht.

**2.** Pyridinborane der allgemeinen Formel

$$MX\text{-}C_5H_4N \cdot BH_3,$$

**dadurch gekennzeichnet, daß**

X für eine -COO⁻-Gruppe oder eine $SO_3^-$-Gruppe steht und

M für ein Alkaliion der Reihe Lithium-, Natrium-, Kalium- oder für ein Äquivalent eines Erdalkaliions der Reihe Magnesium, Kalzium, Strontium oder Barium steht.

**3.** Pyridinborane der allgemeinen Formel

$$MOOC\text{-}C_5H_4N \cdot BH_3,$$

**dadurch gekennzeichnet, daß** die -COO⁻-Gruppe mit dem Ringatom Nummer 3 oder 4 des Pyridinrings verknüpft ist und M die in Anspruch 1 genannten Bedeutungen hat.

**4.** Verfahren zur Herstellung substituierter Pyridinborane der allgemeinen Formel

$$MX\text{-}C_5H_4N \cdot BH_3,$$

in welcher

X und M die in Anspruch 2 genannten Bedeutungen haben, **dadurch gekennzeichnet, daß** man eine Pyridincarbonsäure oder Pyridinsulfonsäure mit einem Boranat gemäß der Reaktionsgleichung

$$HX\text{-}C_5H_4N + MBH_4 \rightarrow MX\text{-}C_5H_4N \cdot BH_3 + H_2,$$

worin

X und M die oben genannten Bedeutungen haben, in einem Lösungsmittel umsetzt.

**5.** Verfahren zur Herstellung substituierter Pyridinborane gemäß Anspruch 4, **dadurch gekennzeichnet, daß** als Lösungsmittel Ethylenglykoldimethylether eingesetzt wird.

**6.** Verwendung der substituierten Pyridinborane gemäß Anspruch 1 zur Reduktion organischer Verbindungen sowie zur Abscheidung von Edelmetallen aus wäßrigen Lösungen von Edelmetallsalzen.

**Claims**

**1.** Pyridine boranes of the formula

$$MX\text{-}C_5H_4N \cdot BH_3$$

**characterized in that**

X represents a -COO⁻ group or an $SO_3^-$ group and

M represents an alkali metal ion, a hydrogen ion or the equivalent of an alkaline earth metal ion.

**2.** Pyridine boranes of the formula

$$MX\text{-}C_5H_4N \cdot BH_3$$

**characterized in that**

X represents a -COO⁻ group or an $SO_3^-$ group and

M represents an alkali metal ion selected from the group consisting of lithium, sodium and potassium or is an equivalent of an alkaline earth metal ion selected from the group consisting of magnesium, calcium, strontium and barium.

**3.** Pyridine boranes of the formula

$$MOOC\text{-}C_5H_4N \cdot BH_3$$

**characterized in that** the -COO⁻ group is bound to ring atom number 3 or 4 of the pyridine ring and M is as defined in Claim 1.

**4.** Process for preparing substituted pyridine boranes of the formula

$$MX\text{-}C_5H_4N \cdot BH_3$$

where
X and M are as defined in Claim 2, **characterized in that** a pyridinecarboxylic acid or pyridinesulphonic acid is reacted with a boranate in accordance with the reaction equation

$$HX\text{-}C_5H_4N + MBH_4 \rightarrow MX\text{-}C_5H_4N \cdot BH_3 + H_2$$

where
X and M are as defined above, in a solvent.

**5.** Process for preparing substituted pyridine boranes according to Claim 4, **characterized in that** ethylene glycol dimethyl ether is used as solvent.

**6.** Use of the substituted pyridine boranes according to Claim 1 for the reduction of organic compounds and for the deposition of noble metals from aqueous solutions of noble metal salts.

## Revendications

**1.** Pyridinoboranes de formule générale

$$MX\text{-}C_5H_4N \cdot BH_3,$$

**caractérisés en ce que**

X    représente un groupe -COO$^-$ ou un groupe -SO$_3^-$ et
M    représente un ion alcalin, un ion hydrogène ou l'équivalent d'un ion alcalino-terreux.

**2.** Pyridinoboranes de formule générale

$$MX\text{-}C_5H_4N \cdot BH_3,$$

**caractérisés en ce que**

X    représente un groupe -COO$^-$ ou un groupe -SO$_3^-$ et
M    représente un ion alcalin du groupe formé par le lithium, le sodium et le potassium ou un équivalent d'un ion alcalino-terreux du groupe du magnésium, du calcium, du strontium ou du baryum.

**3.** Pyridinoboranes de formule générale

$$MOOC - C_5H_4N \cdot BH_3,$$

**caractérisés en ce que** le groupe -COO$^-$ est relié à l'atome n° 3 ou 4 du cycle pyridine et M a les significations indiquées dans la revendication 1.

**4.** Procédé pour la préparation des pyridinoboranes substitués de formule générale

$$MX\text{-}C_5H_4N \cdot BH_3,$$

dans laquelle
X et M ont les significations indiquées dans la revendication 2, **caractérisé en ce que** l'on fait réagir dans un solvant un acide pyridinecarboxylique ou un acide pyridinesulfonique avec un boranate conformément à l'équation

$$HX\text{-}C_5H_4N + MBH_4 \rightarrow MX\text{-}C_5H_4N \cdot BH_3 + H_2,$$

dans laquelle
X et M ont les significations indiquées ci-dessus.

**5.** Procédé pour la préparation des pyridinoboranes substitués selon la revendication 4, **caractérisés en ce que** l'on utilise en tant que solvant l'éther diméthylique de l'éthylèneglycol.

**6.** Utilisation des pyridinoboranes substitués selon la revendication 1 pour la réduction de composés organiques ou pour la séparation de métaux nobles à partir de solutions aqueuses de sels de métaux nobles.